Europäisches Patentamt

European Patent Office

Office européen des brevets

(11) Numéro de publication: **0 416 997 A1**

# DEMANDE DE BREVET EUROPEEN

(21) Numéro de dépôt: **90402440.3**

(51) Int. Cl.⁵: **B60M 1/30**

(22) Date de dépôt: **05.09.90**

(30) Priorité: **07.09.89 FR 8911710**

(43) Date de publication de la demande:
**13.03.91 Bulletin 91/11**

(84) Etats contractants désignés:
**CH DE ES FR GB LI**

(71) Demandeur: **Delachaux S.A.**
**119, Avenue Louis Roche**

**F-92231 GennevilliersCédex(FR)**

(72) Inventeur: **Bommart, Patrick**
**4 rue Talma**
**F-92500 Rueil Malmaison(FR)**

(74) Mandataire: **Martin, Jean-Jacques et al**
**Cabinet REGIMBEAU 26, Avenue Kléber**
**F-75116 Paris(FR)**

(54) **Dispositif de réalisation d'un rail d'alimentation électrique, destiné à assurer l'alimentation électrique d'un mobile et rail d'alimentation électrique susceptible d'être obtenu par ce procédé.**

(57) La présente invention conoerne un procédé de réalisation d'un rail d'alimentation électrique, destiné à assurer l'alimentation électrique d'un mobile ainsi qu'un rail d'alimentation électrique susceptible d'être réalisé par ce procédé.

Pour réaliser un rail (1) d'alimentation électrique, on solidarise mutuellement, de façon continue, un corps de montage (2) et une plaque d'usure (3) en engageant des chants (6, 7) de la plaque d'usure (3) entre des feuillures (9, 10) du corps de montage (2),

en réalisant entre eux une pellicule (14) continue d'un matériau électriquement conducteur qui assure leur solidarisation mutuelle.

On assure ainsi une liaison intime entre la plaque d'usure (3) et le corps (2), d'une façon satisfaisante à la fois sur le plan mécanique et sur le plan électrique, et dans des conditions économiques avantageuses.

FIG.6

Xerox Copy Centre

La présente invention concerne un procédé de réalisation d'un rail d'alimentation électrique, destiné à assurer l'alimentation électrique d'un mobile par l'intermédiaire d'un organe de captation d'électricité porté par ledit mobile et se déplaçant contre ledit rail, ainsi qu'un rail d'alimentation électrique susceptible d'être réalisé par ce procédé.

A titre d'exemples non limitatifs de mobiles susceptibles d'être ainsi alimentés en électricité, on peut citer certains véhicules ferroviaires, certains funiculaires, certains manèges.

Un tel rail d'alimentation électrique peut être réalisé sous la forme d'un profilé massif d'un matériau électriquement conducteur unique mais, de plus en plus fréquemment, il comporte deux composants longitudinaux mutuellement solidaires, électriquement conducteurs, présentant des sections transversales respectives sensiblement constantes notamment définies par des faces longitudinales respectives continues, mutuellement complémentaires, transversalement juxtaposées mutuellement dans une relation de conduction électrique.

L'un de ces composants constitue un corps de montage du rail d'alimentation sur des supports tels que des isolateurs et peut lui-même servir au montage de capots de protection sur le rail d'alimentation ; sa section transversale est généralement largement supérieure à celle de l'autre composant, et déterminée d'une part en fonction de la rigidité que l'on désire communiquer au rail d'alimentation et d'autre part en fonction du courant que l'on désire faire transiter par celui-ci ; pour réduire son poids, pour une section transversale déterminée, on réalise généralement ce corps de montage en aluminium ou en alliage d'aluminium.

L'autre composant constitue une plaque d'usure destinée à coopérer avec l'organe de captation d'électricité porté par le mobile et il est réalisé par exemple à cet effet en acier inoxydable, plus résistant à l'usure que l'aluminium et ses alliages mais plus dense, ou encore en cuivre ou en laiton ; la section transversale de ce deuxième composant est limitée à la valeur nécessaire pour assurer un temps minimal déterminé de fonctionnement avant usure complète et sa forme peut varier en fonction de la conception de l'organe de captation de courant ; cette forme peut par exemple être plate, entre deux faces longitudinales planes, mutuellement parallèles, dont l'une constitue la face précitée de juxtaposition avec le corps de montage et dont l'autre est destinée à coopérer avec l'organe de captation de courant, alors constitué par un frotteur ; elle peut être en V lorsque l'organe de captation de courant est un galet, ces exemples n'étant nullement limitatifs.

Un procédé connu pour la réalisation d'un tel rail d'alimentation électrique à deux composants consiste à réaliser séparément ces composants et à les solidariser ensuite mutuellement par un sertissage ; à cet effet, lorsqu'on désire disposer d'une plaque d'usure plate, on coiffe le corps de montage, par exemple réalisé en aluminium ou alliage d'aluminium, au moyen d'un profilé longitudinal réalisé par exemple en acier inoxydable et présentant une section transversale en U définie par une âme longitudinale constituant la plaque d'usure et par deux ailes dénuées de fonction de coopération avec l'organe de captation d'électricité, et en pratique destinées à permettre un sertissage mutuel de ce profilé en U et du corps de montage ; une graisse de contact interposée entre le profilé en U et le corps de montage assure une liaison électrique répartie entre eux.

Lorsqu'elle est appliquée à la réalisation de rails d'alimentation électrique à plaque d'usure plate, cette technique connue présente un inconvénient en ce que, probablement en raison de phénomènes vibratoires et de la différence entre les coefficients de dilatation thermique respectifs du corps de montage et du profilé constituant la plaque d'usure, ces derniers ont tendance à se décoller mutuellement si bien que, en dépit de la présence de la graisse de contact, le courant électrique adopte des trajets allongés, de façon préjudiciable à la tenue de la plaque d'usure dans le temps ; en outre, cette technique présente l'inconvénient de nécessiter l'utilisation du matériau constitutif de la plaque d'usure en une quantité largement supérieure à celle qui serait nécessaire pour cette seule plaque d'usure, ce qui grève le poids du rail d'alimentation au mètre linéaire de même que son prix de revient.

Pour remédier à ces inconvénients, on a proposé une technique consistant à extruder longitudinalement le corps de montage, par exemple un aluminium ou alliage d'aluminium, au contact d'un profilé longitudinal plat, par exemple en acier inoxydable, défilant longitudinalement à une vitesse correspondant à la vitesse d'extrusion et destiné à former la plaque d'usure.

Cette technique permet d'obtenir une solidarisation mutuelle efficace, notamment en termes de continuité du contact électrique mutuel, entre le corps de montage et la plaque d'usure et de limiter l'utilisation du matériau constitutif de la plaque d'usure à la seule quantité nécessaire à assurer la longévité de cette plaque. Toutefois, cette technique est particulièrement coûteuse de mise en oeuvre notamment du fait de la complexité et du coût des installations qu'elle nécessite.

Le but de la présente invention est de remédier à ces inconvénients en perfectionnant le procédé connu précité, consistant à réaliser séparément les deux composants longitudinaux du rail, à savoir le corps de montage et la plaque d'usure, et à les solidariser ensuite mutuellement.

A cet effet, la présente invention propose un procédé de réalisation d'un rail d'alimentation électrique, destiné à assurer l'alimentation électrique d'un mobile tel qu'un véhicule ferroviaire par l'intermédiaire d'un organe de captation d'électricité porté par ledit mobile et se déplaçant contre ledit rail, ledit rail comportant deux composants longitudinaux mutuellement solidaires, électriquement conducteurs, présentant des sections transversales respectives sensiblement constantes notamment définies par des faces longitudinales respectives continues, mutuellement complémentaires, transversalement juxtaposées mutuellement dans une relation de conduction électrique, à raison d'un corps de montage et d'une plaque d'usure destinée à coopérer avec ledit organe de captation d'électricité,
ledit procédé consistant à réaliser séparément le corps de montage et la plaque d'usure et à les solidariser ensuite mutuellement et étant caractérisé par la succession des étapes consistant à :

a) réaliser le corps de montage et la plaque d'usure en aménageant sur le corps de montage deux feuillures longitudinales continues bordant ladite face longitudinale respective et sur la plaque d'usure deux chants longitudinaux continus bordant ladite face longitudinale respective, lesdites feuillures et ladite face longitudinale du corps de montage et lesdits chants et ladite face longitudinale de la plaque d'usure définissant des profils transversaux mutuellement complémentaires,

b) superposer mutuellement, transversalement, lesdites faces longitudinales par l'intermédiaire d'une feuille d'un matériau électriquement conducteur, présentant une température de fusion inférieure à celles du corps de montage et de la plaque d'usure et susceptible de s'ancrer par fusion au corps de montage et à la plaque d'usure, en juxtaposant mutuellement, transversalement, lesdites feuillures et lesdits chants et en orientant ladite face longitudinale du corps de montage vers le haut, suivant une orientation moyenne approximativement horizontale,

c) provoquer par chauffage la fusion de ladite feuille et appliquer au corps de montage et à la plaque d'usure une sollicitation dans le sens d'un rapprochement mutuel en maintenant ladite orientation de ladite face longitudinale du corps de montage, pour provoquer une migration dudit matériau de ladite feuille en fusion entre lesdites feuillures et lesdits chants mutuellement juxtaposés sous forme d'une pellicule longitudinale continue interposée entre lesdites faces longitudinales d'une part, entre lesdites feuillures et lesdits chants d'autre part,

d) autoriser ou provoquer par refroidissement la solidification de ladite pellicule longitudinale continue en maintenant ladite sollicitation pour ancrer de façon continue ladite pellicule au corps de montage et à la plaque d'usure et solidariser mutuellement ces derniers par l'intermédiaire de ladite pellicule, puis supprimer ladite sollicitation.

Un Homme du métier comprendra aisément qu'un tel procédé permet d'obtenir entre le corps de montage et la plaque d'usure une solidarisation mutuelle sans discontinuité entre leurs faces longitudinales respectives mutuellement juxtaposées, et qu'il en résulte que leur contact électrique mutuel par ces faces longitudinales est lui-même continu, et peut conserver sa continuité dans le temps par un passage direct du courant électrique, entre l'organe de captation porté par le mobile et le corps · de montage, à travers la plaque d'usure et ladite pellicule, même dans le cas d'un rail à plaque d'usure plate ; en outre, il est possible d'utiliser le matériau constitutif de la plaque d'usure dans les quantités nécessaires uniquement à communiquer à celle-ci sa longévité, ce qui permet de réduire le poids linéaire du rail pour une section transversale totale du corps de montage et de la plaque d'usure déterminée, notamment dans le cas d'un rail à plaque d'usure plate et en comparaison avec le rail précité dont la plaque d'usure est formée par une partie d'un profilé en U coiffant le corps de montage.

Cependant, le procédé selon l'invention reste particulièrement économique de mise en oeuvre.

En effet, la plaque d'usure peut conserver une forme géométrique simple, facile à obtenir en un matériau offrant les caractéristiques requises pour la plaque d'usure, tel que l'acier inoxydable ou d'autres métaux ou alliages métalliques appropriés comme par exemple le cuivre ou le laiton, alors que le corps de montage est quant à lui généralement réalisé en un matériau se prêtant à la réalisation de sections transversales complexes notamment par extrusion, comme par exemple l'aluminium et ses alliages.

Selon les natures respectives des matériaux constituant le corps de montage, la plaque d'usure et ladite feuille, il peut être utile ou nécessaire, entre les étapes a) et b), d'appliquer au corps de montage et/ou à la plaque d'usure, sur la face longitudinale respective et sur lesdites feuillures et/ou sur lesdits chants respectivement, un traitement destiné à faciliter l'ancrage par fusion du matériau de ladite feuille, de préférence métallique comme le corps de montage et la plaque d'usure eux-mêmes. C'est notamment le cas lorsque le corps de montage est en aluminium ou alliage d'aluminium, la plaque d'usure en acier inoxydable, ou cuivre, ou laiton et ladite feuille en brasure tendre, auquel cas on applique entre les étapes a) et b), sur lesdites faces longitudinales, lesdites feuillures et lesdits chants, un revêtement d'ancrage de ladite brasure tendre. Par "brasure tendre", on entend une brasure présentant une température de fusion inférieure à celle de l'aluminium, dont on sait qu'elle est elle-même inférieure à celle de l'acier inoxydable.

Les faces longitudinales respectives du corps de montage et de la plaque d'usure peuvent présenter diverses formes lorsqu'elles sont vues en section transversale ; de préférence, elles sont planes, et la plaque d'usure présente à l'opposé de sa face longitudinale juxtaposée au corps de montage une face également plane, parallèle à celle-ci, destinée à coopérer avec l'organe de captation d'électricité porté par le mobile tel qu'un véhicule ferroviaire ou autre ; cependant, en fonction notamment de la forme de cet organe de captation d'électricité et dans le souci de donner à la plaque d'usure une épaisseur constante, on peut également communiquer aux faces longitudinales respectives, mutuellement juxtaposées, du corps de montage et de la plaque d'usure des formes différentes d'une forme plane, et par exemple des sections transversales respectives concaves, notamment en V, ou convexes.

Selon un mode de mise en oeuvre préféré de la présente invention, lesdites faces longitudinales respectives du corps de montage et de la plaque d'usure sont de forme générale plane mais au moins une première desdites faces longitudinales porte des reliefs présentant une même hauteur prédéterminée à partir de ladite première desdites faces longitudinales et entrant en contact avec la seconde desdites faces longitudinales en se noyant dans ledit matériau de ladite feuille en fusion lors de l'étape c, de façon à communiquer à ladite pellicule une épaisseur égale à ladite hauteur prédéterminée entre lesdites faces longitudinales. On peut ainsi appliquer au corps de montage et à la plaque d'usure, lors de l'étape c, ladite sollicitation dans le sens d'un rapprochement mutuel sans avoir à intervenir au niveau des moyens utilisés à cet effet pour assurer la présence d'une épaisseur constante de ladite pellicule, puisque lesdits reliefs limitent coercitivement le rapprochement mutuel de la plaque d'usure et du corps de montage ; on peut de ce fait avoir recours à des moyens simples pour appliquer ladite sollicitation sans risque de voir la plaque d'usure et le corps de montage se rapprocher à un point tel que le matériau en fusion soit totalement chassé d'entre eux. Lesdits reliefs peuvent être rapportés sur ladite première face longitudinale ou être réalisés en une pièce avec le corps de montage ou la plaque d'usure, respectivement, constituant cette première face longitudinale ; lorsque le corps de montage est réalisé par extrusion d'aluminium ou d'un alliage d'aluminium, ils sont avantageusement réalisés d'une pièce avec celui-ci lors de l'extrusion.

De préférence, lesdites feuillures, respectivement lesdits chants, présentent une même dimension à partir de ladite face longitudinale du corps de montage ou de la plaque d'usure, respectivement ; ainsi, lors de l'étape c), les feuillures et ladite face longitudinale du corps de montage, placée horizontalement et tournée vers le haut, constituent un canal retenant le matériau de la feuille en fusion à l'encontre de tout écoulement, jusqu'à l'étape d de solidification de la pellicule longitudinale continue obtenue ; généralement, ladite dimension de chaque feuillure est au plus égale approximativement à ladite dimension du chant correspondant, bien qu'il puisse en être autrement ; toutefois, on préfère que ladite dimension de chaque feuillure soit au plus égale à ladite dimension du chant correspondant augmentée de l'épaisseur que la pellicule réalisée lors de l'étape c) présente entre lesdites faces longitudinales, mutuellement juxtaposées, du corps de montage et de la plaque d'usure.

On peut ainsi mettre en oeuvre le procédé selon l'invention selon un mode préféré conformément auquel, entre les étapes b) et c) et/ou lors de l'étape c) et/ou entre les étapes c) et d), on déforme lesdites feuillures vers lesdits chants de telle sorte que lesdites feuillures présentent à l'opposé de ladite face longitudinale du corps de montage un bord longitudinal respectif, continu en contact transversal direct de pincement avec lesdits chants, respectivement, ce que l'on complète de préférence en communiquant auxdits chants, lors de l'étape a), une conformation favorable à une immobilisation relative de la plaque d'usure et du corps de montage par grippage du fait dudit contact transversal de pincement, et par exemple une conformation choisie dans un groupe comportant les profils en queue d'aronde, les profils molletés, les profils crantés ; une telle déformation est particulièrement aisée si le corps de montage comporte deux rebords longitudinaux dont chacun définit l'une, respective, desdites feuillures ; elle permet d'assurer une immobilisation relative du corps de montage et de la plaque d'usure pendant la solidification de la pellicule longitudinale continue formée entre eux, c'est-à-dire d'assurer un ancrage continu de cette pellicule sur l'un et l'autre et un dimensionnement transversal précis du rail obtenu même si l'on met en oeuvre le procédé selon l'invention en continu, par défilement longitudinal conjoint du corps de montage, de la plaque d'usure et de ladite feuille dans des zones de travail successives mettant en oeuvre lesdites étapes c) et d), ce qui risquerait de présenter des difficultés dans le maintien de la sollicitation du corps de montage et de la plaque d'usure dans le sens d'un rapprochement mutuel pendant toute la phase de fusion puis de refroidissement de la pellicule assurant leur solidarisation mutuelle.

On remarquera que, selon les cas, on peut lors de l'étape b) superposer mutuellement, par l'intermédiaire de ladite feuille, les faces transversales respectives d'un unique corps de montage et d'une unique plaque d'usure mais qu'il est également possible, lors de cette étape b), de superposer mutuellement, par l'intermédiaire de ladite feuille, les faces transversales respectives d'un unique corps de montage, d'une part, et de plusieurs plaques d'usure juxtaposées longitudinalement et définissant entre elles des jeux longitudinaux, d'autre part ; cette dernière possibilité est intéressante en ce qu'elle permet d'éviter que les différences de coefficient de dilatation thermique entre les matériaux constitutifs respectifs du corps de montage et de la plaque d'usure entraînent un cintrage général du rail, en dissociant mutuellement les déformations pouvant survenir entre chaque plaque d'usure et le corps de montage.

Egalement dans le but d'éviter les conséquences des différences de coefficient de dilatation thermique entre les matériaux constitutifs respectifs du corps de montage et de la plaque d'usure sur la géométrie du rail, et lorsque le matériau constitutif du corps de montage présente à la fois une coefficient de dilatation thermique plus élevé que celui du matériau constitutif de la plaque d'usure et une résistivité plus faible que celle de ce dernier matériau comme c'est le cas lorsque le corps de montage est en aluminium ou alliage d'aluminium et la plaque d'usure en acier inoxydable, on peut avantageusement pratiquer par induction haute fréquence le chauffage prévu à l'étape c ; il en résulte en effet une moindre élévation de température du corps de montage, en comparaison avec la plaque d'usure, et les élévations de température respectivement subies peuvent se traduire par des dilatations sensiblement identiques lors du chauffage si bien que la disparition de ces dilatations lors du refroidissement ultérieur, c'est-à-dire lors de l'étape d, conserve des dimensions notamment longitudinales identiques au corps de montage et à la plaque d'usure et que le rail ne se cintre pas.

Dans la mesure où le procédé selon l'invention permet d'obtenir un rail d'alimentation électrique se distinguant, par sa structure, des rails d'alimentation électrique connus jusqu'à présent, la présente invention s'étend à un rail d'alimentation électrique, destiné à assurer l'alimentation électrique d'un mobile tel qu'un véhicule ferroviaire par l'intermédiaire d'un organe de captation d'électricité porté par ledit mobile et se déplaçant contre ledit rail, ledit rail comportant deux composants longitudinaux mutuellement solidaires, électriquement conducteurs, présentant des sections transversales respectives sensiblement constantes notamment définies par des faces longitudinales respectives continues, mutuellement complémentaires, transversalement juxtaposées mutuellement dans une relation de conduction électrique, à raison d'un corps de montage et d'une plaque d'usure destinée à coopérer avec ledit organe de captation d'électricité, caractérisé en ce que

- le corps de montage présente deux feuillures longitudinales continues bordant ladite face longitudinale respective,
- la plaque d'usure présente deux chants longitudinaux continus bordant ladite face longitudinale respective,
- lesdites feuillures et lesdits chants sont transversalement juxtaposés mutuellement,
- entre lesdites faces longitudinales d'une part, entre lesdites feuillures et lesdits chants d'autre part, est interposée une pellicule longitudinale continue d'un matériau électriquement conducteur ancrée de façon continue sur le corps de montage et sur la plaque d'usure et solidarisant mutuellement ces derniers.

Ce rail peut présenter par ailleurs les différentes caractéristiques de structure résultant des modes de mise en oeuvre préférés du procédé selon l'invention qui ont été décrits plus haut.

D'autres caractéristiques et avantages du procédé et du rail d'alimentation électrique selon l'invention ressortiront de la description ci-dessous, relative à des exemples non limitatifs de mise en oeuvre, ainsi que des dessins annexés qui font partie intégrante de cette description.

- La figure 1 illustre schématiquement, en élévation latérale, une installation pour la mise en oeuvre du procédé selon l'invention en continu.

- Les figures 2 à 5 illustrent respectivement des étapes successives de la mise en oeuvre du procédé, en des vues en coupe par des plans repérés respectivement en II-II, III-III, IV-IV, V-V à la figure 1.

- La figure 6 montre une vue en perspective du rail obtenu par la mise en oeuvre du procédé illustré à la figure 1 (partiellement en trait mixte) et selon une variante de mise en oeuvre de ce procédé (en trait plein).

- Les figures 7 et 8 montrent, en des vues en coupe analogues à celle de la figure 5, d'autres exemples non limitatifs de rail d'alimentation électrique susceptible d'être obtenu par la mise en oeuvre du procédé selon l'invention.

- La figure 9 porte sur une variante de réalisation du rail illustré à la figure 6 dont elle illustre deux étapes successives de la fabrication, ses moitiés gauche et droite montrant des vues analogues à celle de la figure 2 et à celle de la figure 3, respectivement, à plus grande échelle.

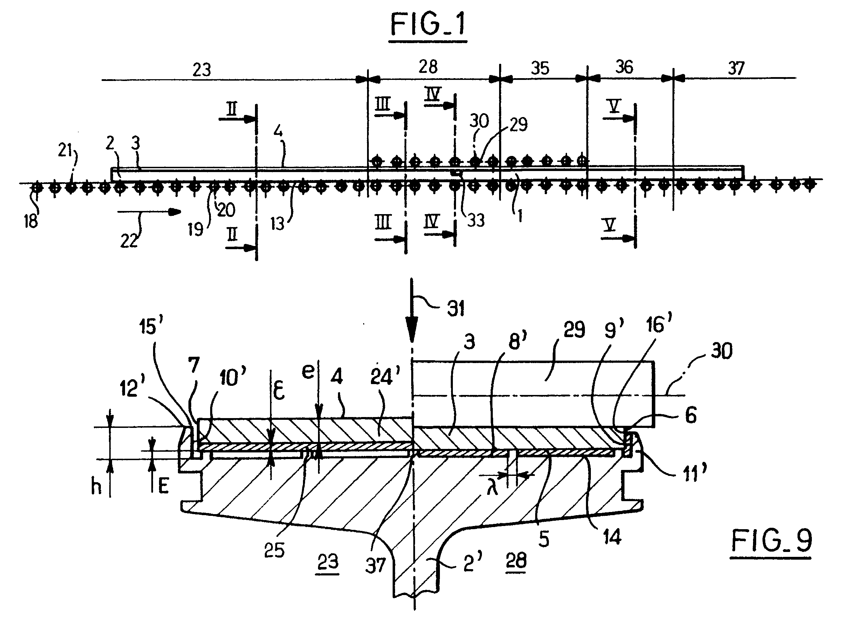

On se référera en premier lieu aux figures 1 à 6, où l'on a illustré la réalisation d'un rail longitudinal 1 d'alimentation électrique comportant deux composants principaux longitudinaux, mutuellement juxtaposés transversalement et solidarisés mutuellement, à raison d'un corps 2, réalisé par exemple sous la forme d'un profilé longitudinal d'aluminium ou d'alliage d'aluminium, et d'une plaque d'usure 3, réalisée par exemple sous la forme d'un feuillard d'acier inoxydable, présentant l'un et l'autre une section transversale constante.

En ce qui concerne la plaque d'usure 3, cette section transversale est rectangulaire, et définie par deux faces principales, longitudinales, planes et mutuellement parallèles 4 et 5, et par deux chants longitudinaux, plans et mutuellement parallèles 6, 7, raccordant mutuellement les faces 4 et 5 et orientés à angle droit par rapport à ces dernières ; les chants 6 et 7 sont de préférence molletés ou crantés ou munis de toute autre conformation favorable à une immobilisation de la plaque d'usure 3 par pincement de ses chants 6, 7 ; en variante ou en complément, ils pourraient converger de la face 5 vers la face 4 et communiquer ainsi à la plaque 3 un profil en queue d'aronde. Les faces 4 et 5 sont mutuellement espacées d'une distance e constituant l'épaisseur de la plaque d'usure 3 et la première d'entre elles est destinée à recevoir un organe de prise de courant non représenté, porté par exemple par un véhicule ferroviaire et destiné à se déplacer longitudinalement sur cette face 4 pour assurer une captation de courant, alors que la seconde est juxtaposée à plat à une face homologue 8 plane, longitudinale, du corps 2 et solidarisée sans discontinuité avec cette face 8 comme il ressortira de la suite de la description, de façon à assurer en outre une conduction électrique homogène entre les faces 5 et 8 ; les chants 6 et 7 sont quant à eux mutuellement espacés d'une distance ou largeur l largement supérieure à e. L'épaisseur e est par exemple de l'ordre de 2,5 mm, pour une largeur l de l'ordre de 55 mm, ces exemples n'étant nullement limitatifs.

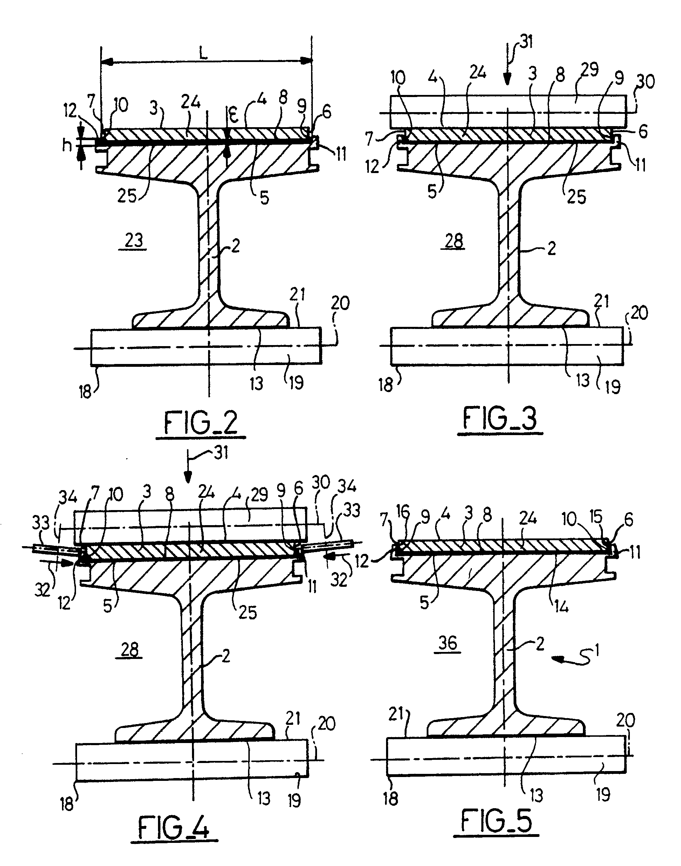

La face longitudinale, plane 8 qui, sur le corps 2, fait front à la face 5 de la plaque d'usure 3 présente quant à elle une dimension transversale L ou largeur supérieure de quelques dixièmes de millimètre, et par exemple de 2/10 de mm, à la largeur l de la plaque d'usure 3, et notamment de la face 5 de celle-ci ; comme il ressort de l'examen de la figure 2, cette largeur L se mesure entre deux feuillures longitudinales, planes 9, 10 qui bordent transversalement la face 8 et sont orientées perpendiculairement à celle-ci ; concrètement, les deux feuillures 9, 10 sont définies par deux rebords longitudinaux 11, 12 que le corps 2 présente en saillie par rapport à sa face 8, respectivement de part et d'autre de celle-ci transversalement ; les rebords 11, 12, de même que les feuillures 9, 10, présentent perpendiculairement à la face 8 une dimension h ou hauteur qui pourrait être supérieure à l'épaisseur e de la plaque d'usure 3 mais est de préférence au plus égale à cette épaisseur e, et même, comme il est illustré, inférieure d'une valeur de l'ordre de quelques dixièmes de millimètre à cette épaisseur e afin d'éviter tout risque de contact entre l'organe mobile de captation de courant porté par le véhicule ferroviaire, par exemple, et le corps 2. De préférence, la valeur de h est ainsi de l'ordre de 50% à 100% de celle de e, et notamment de l'ordre de 80% de celle de e, ces valeurs n'étant indiquées qu'à titre d'exemple non limitatif.

La section transversale du corps 2 est par ailleurs indifférente au regard de la présente invention, et déterminée, de façon connue par un Homme du métier, de telle sorte que ce corps 2 se prête au montage du rail 1 sur un support approprié, par l'intermédiaire d'isolateurs non représentés, ainsi qu'au montage sur le rail 1 de toute protection désirée, non représentée ; en outre, cette section est telle que le rail 1 considéré dans son ensemble présente une section globale en rapport avec l'intensité du courant qu'il doit véhiculer ; à titre d'exemple non limitatif, le corps 2 illustré présente une section transversale en I, présentant à l'opposé de la face 8 une face également longitudinale et plane 13, parallèle à la face 8 et orientée en sens inverse de la face 8.

Dans ces conditions, et si l'on se réfère au rail 1 terminé, la face 5 de la plaque d'usure 3 et les chants 6 et 7 de celle-ci sont placés en regard de la face 8 du corps 2 et des feuillures 9 et 10 de celui-ci, respectivement, en respectant toutefois un jeu continu d'une épaisseur E largement inférieure à l'épaisseur e et à la hauteur h, c'est-à-dire de l'ordre du dixième de millimètre ou de quelques dixièmes de millimètre et par exemple de l'ordre de 1,5 à 2 dixièmes de millimètre, lequel jeu est intégralement comblé par une pellicule longitudinale, continue 14 d'un matériau qui, à la fois, solidarise mutuellement la plaque d'usure et le corps 2 sans discontinuité entre leurs faces 5 et 6 ainsi placées en regard ainsi qu'entre les chants 6, 7, d'une part, et les feuillures 9, 10 qui leur font face, d'autre part, et assure une conduction électrique également continue entre les faces 5 et 8 et entre les chants 6 et 7, d'une part, et les feuillures 9 et 10, d'autre part. Dans l'exemple où le corps 2 est réalisé en aluminium ou alliage d'aluminium et la plaque d'usure 3 en acier inoxydable, le matériau constitutif de la pellicule 14 est une brasure tendre, c'est-à-dire une brasure présentant une température de fusion inférieure à celle de l'aluminium ou alliage d'aluminium constitutif du corps 2, elle-même inférieure à celle de l'acier inoxydable constituant la plaque d'usure 3. A titre d'exemple non limitatif d'une telle brasure tendre, on peut citer un alliage étain-plomb.

La pellicule 14 assure en outre une étanchéité continue entre la face 8, les feuillures 9 et 10 du corps 2, d'une part et la face 5 ainsi que les chants 6 et 7 de la plaque d'usure 3 d'autre part, ce qui évite toute introduction d'humidité entre la plaque d'usure 3 et le corps 2 et, ainsi, tout risque d'effet de pile qui pourrait en résulter. De préférence, comme il ressort de l'examen de la figure 5, les feuillures 9 et 10, en dépit de leur planéité générale et de leur caractère généralement perpendiculaire à la face 8, présentent une légère incurvation dans le sens d'un rapprochement mutuel de telle sorte que, à l'opposé de leur raccordement avec la face 8, chacune d'entre elles présente, en contact transversal continu avec le chant respectivement correspondant 6, 7 de la plaque d'usure 3, un bord longitudinal, rectiligne respectif 15, 16 délimitant également la pellicule 14 lorsque, comme il est illustré, la hauteur h des feuillures 9 et 10 est inférieure à l'épaisseur e de la plaque d'usure 3 ou lorsque cette épaisseur et cette hauteur sont égales, ou encore lorsque la hauteur h est supérieure à l'épaisseur e d'une valeur n'excédant pas l'épaisseur, égale à E, que la pellicule 14 présente entre les faces 5 et 8.

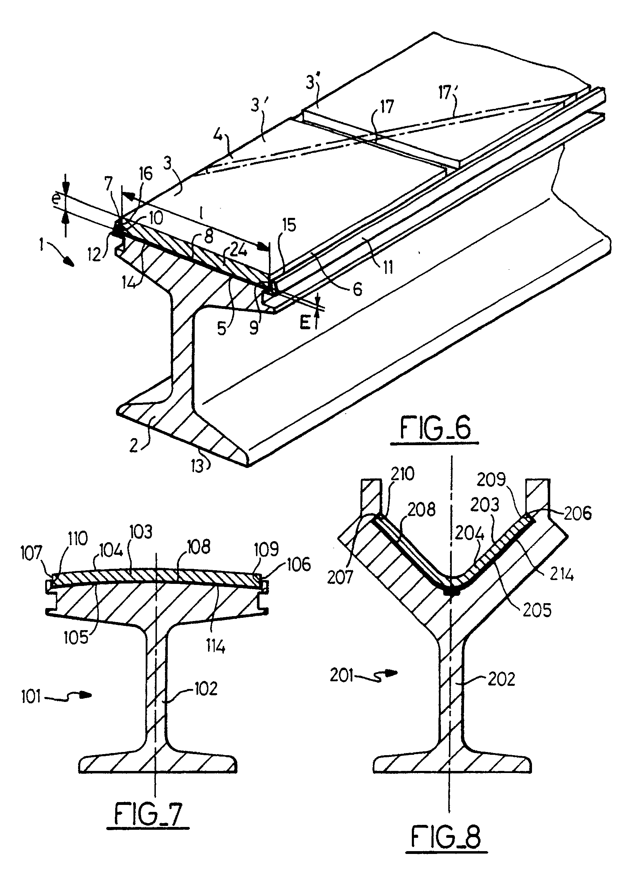

Selon un mode de mise en oeuvre de l'invention illustré pour partie en trait mixte à la figure 6, le rail 1 peut se présenter en tronçons longitudinaux sur lesquels le corps 2 ainsi que la plaque d'usure 3 s'étendent longitudinalement sans discontinuité ; toutefois, comme on l'a illustré en trait plein à la figure 6, à un même tronçon longitudinal de corps 2 peut correspondre une pluralité de tronçons longitudinaux $3'$, $3''$ de plaque d'usure 3, laissant subsister entre eux des jeux longitudinaux 17 ou $17'$ au niveau desquels la pellicule 14 peut éventuellement présenter en référence à la face 8 du corps 2 une épaisseur identique à la hauteur h des feuillures 9, 10 lorsque h est inférieure ou égale à l'épaisseur e de la plaque d'usure 3, éventuellement augmentée de l'épaisseur que la pellicule 14 présente par ailleurs, entre les faces 5 et 8. Les jeux longitudinaux 17 ou $17'$ peuvent présenter, comme on l'a illustré en trait plein en 17, la forme de bandes rectilignes orientées transversalement, c'est-à-dire perpendiculairement à la direction longitudinale du rail 1, ou, comme on l'a illustré en trait mixte en $17'$, la forme de bandes rectilignes orientées obliquement par rapport à la direction longitudinale du rail 1, ou encore toute autre forme notamment non rectiligne et toute autre orientation.

Un rail 1 ainsi conçu peut avantageusement être réalisé au moyen d'une installation du type schématisé à la figure 1, en référence à laquelle on décrira les étapes successives de réalisation d'un tel rail 1.

L'installation illustrée à la figure 1 se prête à une fabrication du rail 1 en continu, en tronçons d'une longueur indifférente.

L'installation illustrée à la figure 1 comporte notamment un transporteur 18 du type à rouleaux 19 montés à la rotation libre autour d'axes horizontaux respectifs 20 mutuellement parallèles, de façon à constituer vers le haut une face supérieure 21, plane et horizontale, du transporteur 18 ; des moyens d'entraînement non représentés, connus en eux-mêmes d'un Homme du métier, permettent de déplacer longitudinalement, de façon continue, un corps de montage 2, reposant par sa face 13 sur les rouleaux 19, c'est-à-dire la face 21 du transporteur, dans un sens 22 qui servira ultérieurement de référence aux notions d'amont et d'aval.

Dans une zone amont 23 du transporteur 18, on dépose sur la face 21 de celui-ci le corps 2 d'un rail 1 à réaliser, de telle sorte que le sens 22 soit orienté longitudinalement en référence à ce corps 2 ; le corps 2 est ainsi déposé par sa face 13 sur la face 21 du transporteur 18, de telle sorte que sa face 8 soit disposée horizontalement et tournée vers le haut, et que les feuillures 9 et 10 définissent ainsi avec elle un canal longitudinal 24 comme le montre la figure 2 ; avantageusement, la face 8 et les feuillures 9 et 10 du corps 2 ont subi au préalable, c'est-à-dire avant le dépôt du corps 2 sur la face 21 du transport 18, un traitement destiné à faciliter l'ancrage de la pellicule 14 sur eux, par exemple sous forme d'un dépôt de nickel et/ou de cuivre puis éventuellement d'étain lorsque la pellicule 14 est réalisée en alliage d'étain et de plomb comme on l'a indiqué plus haut et le corps 2 en aluminium, cet exemple n'étant nullement limitatif ; ce dépôt peut s'effectuer par tout moyen connu et par exemple par choupage ou électrolyse, une électrolyse par le procédé connu dit "au tampon" étant préférée en ce qu'elle peut se limiter à la face 8 et aux feuillures 9 et 10 du corps 2.

Sur la face 8 du corps 2, dans le canal 24, repose une feuille 25 du matériau constitutif de la pellicule 14, à savoir dans l'exemple évoqué plus haut un clinquant d'alliage d'étain et de plomb présentant une épaisseur uniforme $\epsilon$ inférieure à la hauteur h des feuillures 9 et 10 ainsi qu'à l'épaisseur e de la plaque d'usure 3 mais supérieure à l'épaisseur E de la pellicule 14 du rail à réaliser, et s'étendant transversalement de l'une à l'autre des feuillures 9 et 10 du corps 2, sur toute la distance L séparant mutuellement ces feuillures 9 et 10 ; l'épaisseur $\epsilon$ est calculée de telle sorte que, multipliée par la distance L, elle corresponde à une section transversale de la feuille 25 sensiblement identique, ou éventuellement légèrement supérieure, à celle de la pellicule 14 du rail 1 à réalisée ; elle est par exemple de l'ordre de quelques dixièmes de millimètres ; selon une variante non représentée, la feuille 25 pourrait présenter entre les feuillures 9 et 10 une dimension inférieure à L mais son épaisseur ε serait néanmoins calculée de façon à conserver entre les sections respectives de la feuille 25 et de la pellicule 14 la relation précitée.

En outre, sur la feuille 25 repose la plaque d'usure 3 réalisée soit d'une seule pièce, présentant des dimensions longitudinales égales à celles du corps 2, soit sous forme de tronçons longitudinaux 3', 3" présentant des dimensions longitudinales respectives inférieures à celles du corps 2 et longitudinalement espacés mutuellement, de telle sorte que la face 5 repose sur la feuille 25 et, par l'intermédiaire de celle-ci, sur la face 8, et que les chants 6 et 7 soient placés en regard des feuillures 9 et 10, respectivement, en respectant un jeu transversal sensiblement identique par rapport à ces feuillures. De préférence, la plaque d'usure 3 ou chaque tronçon 3', 3" de celle-ci ont été préalablement soumis, sur la face 8 ainsi que sur les chants 6 et 7 ou du moins sur une zone de ces derniers destinée à venir en regard des feuillures 9 et 10, à un traitement destiné à faciliter l'ancrage ultérieur du matériau constitutif de la feuille 25 et de la pellicule 14 ; lorsque la feuille 14 est réalisée en alliage d'étain et de plomb et la plaque d'usure 3, ou chaque tronçon 3', 3" de celle-ci en acier inoxydable, ce traitement peut consister en un étamage par l'un quelconque des procédés indiqués plus haut à propos du traitement analogue du corps 2, et de préférence par une électrolyse au tampon limitée à la face 5 et aux chants 6 et 7 de la plaque d'usure 3 ou de chaque tronçon 3', 3" de celle-ci.

Eventuellement, de façon non représentée à la figure 2, la superposition du corps 2, de la feuille 25 et de la plaque d'usure 3 ou de chaque tronçon 3', 3" de celle-ci peut être stabilisée par un sertissage des chants 6 et 7 entre les feuillures 10 et 11, résultant d'une déformation des rebords 11 et 12 dans le sens d'un rapprochement mutuel et d'une conformation des chants favorable à une immobilisation relative du fait du contact qui s'établit ainsi entre les feuillures et les chants ; ce sertissage doit cependant rester suffisamment léger pour ne créer qu'un effet de grippage entre les feuillures et les chants pour s'opposer essentiellement à un cheminement de la plaque d'usure 3 en des tronçons 3', 3" de celle-ci par rapport au corps de montage 2 pendant la mise en oeuvre du procédé de fabrication du rail sans s'opposer à ce que, lors d'une étape ultérieure de la mise en oeuvre du procédé qui sera décrite en référence à la figure 3, on puisse par une sollicitation appropriée 31 enfoncer davantage la plaque d'usure 3, ou chaque tronçon 3', 3" entre les feuillures 9 et 10.

Ensuite, le corps 2, la feuille 25 et la plaque d'usure 3, ou les tronçons 3', 3" de celle-ci, se déplacent a l'unisson dans le sens 22 sur la face supérieure 21 du transporteur 18, qui les amène de la zone amont 23 ou zone d'alimentation à une zone 28 où l'on provoque par chauffage à une température supérieure à la température de fusion du matériau constitutif de la feuille 25 mais inférieure a la plus faible des températures de fusion respectivement du corps 2 et de la plaque d'usure 3 ou des tronçons 3', 3" de celle-ci, c'est-à-dire en pratique inférieure à la température de l'aluminium ou alliage d'aluminium constitutif du corps 2 dans l'exemple choisi, par exemple à l'aide de moyens de chauffage par induction haute fréquence, une fusion du matériau constitutif de la feuille 25 ainsi qu'un pressage contrôlé de la plaque d'usure 3 ou des tronçons 3', 3" de celle-ci contre le corps 2, comme le montre la figure 3.

A cet effet, dans la totalité de la zone de fusion et de pressage 28, en regard des rouleaux 19 du transporteur 18 sont disposés, au-dessus de la face supérieure 21 de celui-ci, d'autres rouleaux 29 montés à rotation libre autour d'axes horizontaux respectifs 30 parallèles aux axes des rouleaux 19 et l'écartement mutuel des axes respectifs 20 et 30 des rouleaux 19 et 29 dans la zone 28 peut être réglé de telle sorte que, au passage dans la zone 28, la plaque d'usure 3 ou chaque tronçon 3', 3" de celle-ci soit sollicité dans un sens transversal vertical 31 descendant vers le corps 2 et se rapproche ainsi de la face 8 en forçant le matériau de la feuille 25 en fusion à migrer entre les feuillures 9 et 10 du corps 2 et les chants 6 et 7 de la plaque d'usure 3 ou des tronçons 3', 3" de celle-ci, ainsi qu'entre ces tronçons 3' et 3" éventuels ; par un réglage approprié de l'écartement mutuel des axes respectifs 20 et 30 des rouleaux 19 et 29, ce rapprochement présente une amplitude telle que la migration du matériau de la feuille 25 en fusion entre les feuillures 9 et 10 du corps 2 et les chants 6 et 7 de la plaque d'usure 3 ou des tronçons 3' et 3" de celle-ci s'effectue sans discontinuité sur la totalité de la hauteur h des feuillures 9 et 10 si cette hauteur h est au plus égale à l'épaisseur e de la plaque d'usure 3, éventuellement augmentée de l'épaisseur E de la pellicule 14 à réaliser, sans pour autant que s'établisse une discontinuité dans le matériau constitutif de la feuille 25 entre les faces 5 de la plaque d'usure 3 ou des tronçons 3', 3" de celle-ci et la face 8 du corps 2, c'est-à-dire notamment sans contact mutuel direct des faces 5 et 8.

Selon une variante non représentée, les rouleaux 29 pourraient être remplacés par d'autres moyens propres à solliciter la plaque d'usure ou chaque tronçon 3',3" de celle-ci vers le corps 2 pour provoquer le rapprochement mutuel précité des faces 5 et 8 et la migration précitée du matériau de la feuille 25 en fusion. Par exemple, ils pourraient être remplacés par une plaque de pressage, notamment en graphite, en contact glissant avec la face 4 de la plaque d'usure 3 ou de chaque tronçon 3´, 3´´ de celle-ci.

Selon une autre variante illustrée à la figure 9, où l'on retrouve à l'identique la plaque d'usure 3, dont les différentes parties conservent les mêmes références numériques, ainsi que la feuille 25 et où l'on retrouve un corps de montage 2´ présentant de nombreuses analogies avec le corps de montage 2 et dont les différentes parties conservent les mêmes références numériques affectées de l'exposant ´, le positionnement relatif précis de la plaque d'usure 3 et du corps 2´ lors du passage dans la zone de fusion et de pressage 28 peut être facilité par la présence, sur l'une au moins des faces 5 et 8´, par ailleurs de forme générale plane, de reliefs localisés 37 formant sur cette face une saillie d'une même hauteur égale à l'épaisseur E de la pellicule 14 à réaliser. Dans l'exemple illustré, ces reliefs localisés 37 sont aménagés sur la face 8´ par réalisation en une pièce avec le corps 2´, notamment par extrusion, sous forme de cinq nervures longitudinales continues de section transversale rectangulaire, dont une première ou nervure centrale est équidistante des feuillures 9´ et 10´, dont deux autres ou nervures latérales sont placées respectivement à proximité immédiate de la feuillure 9´ et à proximité immédiate de la feuille 10´, en respectant toutefois un jeu continu vis-à-vis de ces dernières, et dont deux autres ou nervures intermédiaires sont placées entre la nervure centrale et, respectivement, l'une ou l'autre des nervures latérales ; parallèlement à la face 8´, ces nervures 37 présentent une dimension transversale faible devant les largeurs l et L et par exemple de l'ordre de 1,0 à 1,5 mm.

Ainsi, dans la zone amont 23 du transporteur 18, comme le montre la moitié gauche de la figure 9, on pratique de la façon décrite en référence à la figure 2 si ce n'est qu'au lieu de reposer directement sur la face 8´, la feuille 25 repose sur les reliefs localisés 37 constitués par les nervures de cette face 8´. On pratique également par la suite identiquement à ce que l'on a décrit en référence à la figure 3 mais on remarque que, au passage dans la zone de fusion et de pressage 28, comme le montre la moitié droite de la figure 9, la plaque d'usure 3 descendant vers le corps 2´ en provoquant la migration du matériau constitutif de la feuille 25, sous l'effet des rouleaux 29 ou autres moyens les remplaçant, vient s'appuyer par sa face 5 sur les reliefs localisés 37 constitués par les nervures de la face 8´, c'est-à-dire occuper par rapport au corps 2´ une position dans laquelle les faces 5 et 8´ sont mutuellement espacées de E en laissant ainsi subsister entre elles un jeu intégralement comblé par le matériau de la feuille 25 en fusion, dans lequel sont noyés les reliefs localisés 37 et qui comble également le jeu entre chaque feuillure 9´, 10´ et le chant respectivement correspondant 6, 7 de la plaque d'usure 3.

Naturellement, ce, mode de réalisation des reliefs localisés 37 ne constitue qu'un exemple non limitatif et, en particulier, ces reliefs localisés pourraient être aménagés sur une face, correspondant à la face 5, d'une plaque d'usure par ailleurs identique à la plaque d'usure 3, qui reposerait alors par leur intermédiaire sur la feuille 25 reposant alors directement sur la face 8 d'un corps 2 dans la zone amont 23 du transporteur 18 ; en outre, au lieu d'être réalisés en une seule pièce avec le corps de montage 2´ ou avec la plaque d'usure 3, ils pourraient être rapportés, éventuellement librement, sur la face 8 d'un corps 2 ou sur la face 5 d'une plaque d'usure 3.

Ensuite, dans la zone de fusion et de pressage 28 et alors que le matériau constitutif de la feuille 25 est encore à l'état fondu, on applique de préférence aux rebords 11 et 12 du corps 2 en cours de défilement dans le sens 22, comme le montre la figure 4, ou aux rebords 11´ et 11´´ du corps 2´ de façon non représentée, des poussées transversales dans le sens 32 d'un rapprochement mutuel de façon à assurer un sertissage ferme de la plaque d'usure 3 ou des tronçons 3´, 3´´ de celle-ci entre les rebords 11, 12 ou 11´, 12´ ou à rafermir le sertissage éventuellement réalisé préalablement à la fusion du matériau constitutif de la feuille 25 ; par exemple, à cet effet, le corps 2 ou 2´ en cours de défilement passe entre des galets de sertissage 33 montés à la rotation libre autour d'axes 34 approximativement verticaux, respectivement de part et d'autre du passage obligé du corps 2 ou 2´, au niveau supérieur des rebords 11, 12 ou 11´, 12´ de celui-ci ; ce sertissage donne lieu au contact mutuel des feuillures 9, 10 ou 9´, 10´ du corps 2 ou 2´ et des chants 6, 7 de la plaque d'usure 3 ou des tronçons 3´, 3´´ de celle-ci décrits plus haut, le long d'un bord longitudinal, rectiligne, continu 15, 16 ou 15´, 16´ des feuillures 9, 10 ou 9´, 10´ opposé au raccordement de ces dernières avec la face 8 ou 8´ si la hauteur h est au plus égale à l'épaisseur e, éventuellement augmentée de l'épaisseur E de la pellicule 14 à réaliser.

Grâce à ce sertissage, d'une part on est assuré de ce que le matériau constitutif de la feuille 25, en fusion, emplit intégralement le canal 24 ou 24´ entre le corps 2 ou 2´ et la plaque d'usure 3 ou les tronçons 3´, 3´´ de celle-ci et, d'autre part, on est assuré d'un positionnement relatif rigoureux, constant, de la plaque d'usure 3 ou des tronçons 3´, 3´´ de celle-ci et du corps 2 ou 2´ en dépit du fait que les rouleaux 29 ne s'appliquent que localement sur la face 4 de la plaque d'usure 3 ou des tronçons 3′, 3″ de celle-ci, au risque de provoquer dans celle-ci des déplacements d'ondes se transmettant jusqu'au matériau constitutif de la feuille 25 en fusion au cours du défilement conjoint du corps 2 ou 2′, de la plaque d'usure 3 ou des tronçons 3′, 3″ de celle-ci et du matériau constitutif de la feuille 25 en fusion dans la zone 28 de fusion et de pressage ; en d'autres termes, on est assuré de ce que le positionnement relatif précis communiqué à la plaque d'usure 3 ou aux tronçons 3′, 3″ de celle-ci et au corps 2 ou 2′ dans la zone de fusion et de pressage 28 est définitif.

Un excédent éventuel de matériau constitutif de la feuille 25 en fusion, qui peut avoir été amené à déborder du canal 24 ou 24′, est essuyé par des moyens non représentés prévus à cet effet dans la zone 28, en aval des galets de sertissage 33 ; on remarquera que pour éviter qu'un tel excédent souille la face 4 de la plaque d'usure 3 ou de chaque tronçon 3′, 3″ de celle-ci, il est préférable que la hauteur h soit choisie inférieure à l'épaisseur e augmentée de l'épaisseur E de la pellicule 14 à réaliser.

Le rail 1 présente alors sa constitution et sa conformation définitives, illustrées à la figure 5 en ce qui concerne le cas d'un corps dont la face 8 est démunie de reliefs localisés 37, et quitte la zone de fusion et de pressage pour une zone 35 de refroidissement avec pressage ; dans la totalité de cette zone, non détaillée, des rouleaux 29 en tout point analogues à ceux de la zone 28 de fusion et de pressage, ou d'autres moyens équivalents tels qu'une plaque de pressage, sont disposés au-dessus de la face 21 du transporteur 18, en respectant le même écartement de leurs axes 30 par rapport aux axes 20 des rouleaux 19 de celui-ci que dans la zone de fusion et de pressage 28, mais on laisse le matériau constitutif de la feuille 25 se solidifier progressivement, sous forme de la pellicule 14 ou on provoque cette solidification par un refroidissement forcé ; ensuite, le rail 1 continuant à se déplacer dans le sens 22 traverse une zone 36 de refroidissement sans pression, comme le montre la figure 5, ce qui permet de parachever la solidification de la pellicule 14, puis le rail 1 parvient dans une zone 37 d'évacuation vers des aires de stockage ; dans cette zone 37 et si la plaque d'usure 3 a été déposée en un tronçon unique sur la feuille 25 reposant elle-même sur le corps 2 ou 2′ alors que l'on désire qu'à un même corps longitudinal 2 ou 2′ correspondent plusieurs tronçons 3′, 3″ de plaque d'usure, longitudinaux et juxtaposés longitudinalement, on peut appliquer dans cette zone 37 à la plaque d'usure 3 continue, ainsi qu'aux rebords 11, 12 ou 11′, 12′ du corps 2 ou 2′, un rainurage transversal limité permettant de dissocier mutuellement des tronçons 3′, 3″ de plaque d'usure 3 en préservant la continuité d'ensemble du corps 2 ou 2′.

Dans les zones 35 et 36 de refroidissement, peuvent être prévus des moyens conformateurs, non représentés mais aisément concevables pour un homme du métier pour garantir la préservation de la rectilinéarité du corps 2 ou 2′ et assurer de ce fait au rail 1 une telle rectilinéarité.

Dans le rail 1 terminé, la pellicule 14 assure l'essentiel de la solidarisation mutuelle de la plaque d'usure 3 en des tronçons 3′, 3″ et du corps de montage 2 ou 2′, le sertissage des feuillures 9, 10 ou 9′, 10′ sur les chants 6, 7 n'assurant qu'un rôle secondaire dans cette solidarisation mutuelle ; lorsque l'une au moins 8′ des faces 5 et 8′ présente des reliefs localisés 37 comme on l'a décrit en référence à la figure 9, ces reliefs localisés, qui assurent à la pellicule 14 une épaisseur uniforme par appui mutuel de la plaque d'usure 3 et du corps de montage 2′ tant que cette pellicule 14 n'est pas solidifiée, restent noyés dans celle-ci après sa solidification et placés, à travers elle, au contact de l'autre 5 de ces faces longitudinales 5, 8′.

Naturellement, le mode de mise en oeuvre de l'invention qui vient d'être décrit ne constitue qu'un exemple non limitatif, par rapport auquel on pourra prévoir de nombreuses variantes sans sortir pour autant du cadre de la présente invention.

Ces variantes pourront notamment porter sur les matériaux constitutifs du corps 2 ou 2′, de la plaque d'usure 3 ou de ses tronçons 3′, 3″, et de la pellicule 14 ou de la feuille 25 la constituant après fusion et solidification ; en particulier, bien que l'on ait décrit une plaque d'usure 3 et des tronçons 3′, 3″ de plaque d'usure en acier inoxydable, on retrouvera tous les avantages de la présente invention dans le cas de plaques d'usure ou tronçons de plaque d'usure réalisés en d'autres métaux ou alliages métalliques appropriés comme par exemple le cuivre ou le laiton.

Ces variantes pourront également porter sur les formes respectives du corps 2 ou 2′ et de la plaque d'usure 3 ou de ses tronçons 3′, 3″.

Ainsi, à titre d'exemple non limitatif, on a illustré à la figure 7 une coupe transversale d'un rail longitudinal 101 réalisé conformément à la présente invention et dont le corps longitudinal 102 est en tout point analogue au corps 2 décrit précédemment si ce n'est que sa face longitudinale 108 correspondant à la face 8 du corps 2 est bombée, convexe, entre les feuillures longitudinales 109, 110 quant à elles analogues aux feuillures 109 et 110, respectivement ; la plaque d'usure 103 est elle-même en tout point analogue à la plaque d'usure 3 décrite précédemment si ce n'est que ses faces 104, 105 correspondant respectivement aux faces 4 et 5 de la plaque d'usure 3 sont respectivement convexe et concave, la face 105 ainsi placée en regard de la face 108 respectant vis-à-vis de cette dernière un jeu continu comme la face 5 de la plaque d'usure 3 par rapport à la face 8 du corps 2 ; ainsi, entre ces faces 105 et 108 de même qu'entre les feuillures 109 et 110, d'une part, et les chants 106 et 107 de la plaque d'usure 103, d'autre part, lesquels sont analogues respectivement aux chants 6 et 7 de la plaque d'usure 3, est interposée une pellicule continue 114 assurant à la fois la solidarisation mutuelle de la plaque d'usure 103 et du corps 102 et une continuité électrique entre eux ; de préférence, les autres dispositions décrites en référence au rail 1 sont également reprises, et notamment le sertissage mutuel de la plaque d'usure 103 et du corps 102 et l'éventuelle subdivision de la plaque 103 en plusieurs tronçons longitudinaux, longitudinalement espacés mutuellement.

La figure 8 montre quant à elle un rail selon l'invention 201 dont le corps 202 est analogue au corps 2 si ce n'est que, entre des feuillures 209 et 210 analogues respectivement aux feuillures 9 et 10, il présente au lieu de la face plane 8 une face en creux 208, présentant lorsqu'elle est vue en coupe transversale comme c'est le cas à la figure 10 une section en V, concave vers le haut ; la plaque d'usure 3 est dans ce cas remplacée par une plaque d'usure 203 présentant la forme générale d'une cornière, délimitée par deux faces en V 204, 205 correspondant respectivement aux faces 4 et 5, notamment en ce que la face 205 est placée en regard de la face 208 mais respecte vis-à-vis de cette dernière un jeu continu comblé par une pellicule 214 en tout point comparable à la pellicule 14 ; dans ce cas également, les différentes dispositions décrites en référence au rail 1 peuvent être reprises, et notamment un sertissage de chants 206, 207 de la plaque d'usure 203, analogues respectivement aux chants 6 et 7 de la plaque d'usure 3, entre les feuillures 209 et 210 du corps 202 ; de même, dans ce cas également, la plaque d'usure 203 pourrait être remplacée par une pluralité de tronçons longitudinaux de plaque d'usure, mutuellement juxtaposés longitudinalement avec respect d'un jeu longitudinal entre eux.

Naturellement, dans le cas de ces variantes, on pourrait également prévoir que l'une au moins des faces longitudinales 105 et 108 ou 205 et 208, et de préférence la face longitudinale 108 ou 208 du corps de montage 102, 202, présente des reliefs localisés analogues aux reliefs localisés 37 pour assurer une épaisseur uniforme à la pellicule 114 ou 214, de façon non illustrée mais aisément compréhensible par un Homme du métier.

## Revendications

1. Procédé de réalisation d'un rail (1, 101, 201) d'alimentation électrique, destiné à assurer l'alimentation électrique d'un mobile par l'intermédiaire d'un organe de captation d'électricité porté par ledit mobile set se déplaçant contre ledit rail (1, 101, 201), ledit rail (1, 101, 201) comportant deux composants longitudinaux (2, 2', 3, 102, 103, 202, 203) mutuellement solidaires, électriquement conducteurs, présentant des sections transversales respectives sensiblement constantes notamment définies par des faces longitudinales (5, 8, 8', 105, 108, 205, 208) respectives continues, mutuellement complémentaires, transversalement juxtaposées mutuellement dans une relation de conduction électrique, à raison d'un corps de montage (2, 2', 102, 202) et d'une plaque d'usure (3, 103, 203) destinée à coopérer avec ledit organe de captation d'électricité,

ledit procédé consistant à réaliser séparément le corps de montage (2, 2', 102, 202) et la plaque d'usure (3, 103, 203) et à les solidariser ensuite mutuellement et étant caractérisé par la succession des étapes consistant à :

a) réaliser le corps de montage (2, 2', 102, 202) et la plaque d'usure (3, 103, 203) en aménageant sur le corps de montage (2, 2', 102, 202) deux feuillures longitudinales continues (9, 10, 9', 10', 109, 110, 209, 210) bordant ladite face longitudinale respective (8, 8', 108, 203) et sur la plaque d'usure (3, 103, 203) deux chants longitudinaux continus (6, 7, 106, 107, 206, 207) bordant ladite face longitudinale respective (5, 105, 205), lesdits feuillures (9, 10, 9', 10', 109, 110, 209, 210) et ladite face longitudinale (8, 8', 108, 208) du corps de montage (2, 2', 102, 202) et lesdits chants (6, 7, 106, 107, 206, 207) et ladite face longitudinale (5, 105, 205) de la plaque d'usure (5, 105, 205) définissant des profils transversaux mutuellement complémentaires,

b) superposer mutuellement, transversalement, lesdites faces longitudinales (5, 8, 8', 105, 108, 205, 208) par l'intermédiaire d'une feuille (25) d'un matériau électriquement conducteur, présentant une température de fusion inférieure à celles du corps de montage (2, 2', 102, 202) et de la plaque d'usure (3, 103, 203) et susceptible de s'ancrer par fusion au corps de montage (2, 2', 102, 202) et à la plaque d'usure (3, 103, 203), en juxtaposant mutuellement, transversalement, lesdites feuillures (9, 10, 9', 10', 109, 110, 209, 210) et lesdits chants (6, 7, 106, 107, 206, 207) et en orientant ladite face longitudinale (8, 8', 108, 208) du corps de montage (2, 2', 102, 202) vers le haut, suivant une orientation moyenne approximativement horizontale,

c) provoquer par chauffage la fusion de ladite feuille (25) et appliquer au corps de montage (2, 2', 102, 202) et à la plaque d'usure (3, 103, 203) une sollicitation dans le sens (31) d'un rapprochement mutuel en maintenant ladite orientation de ladite face longitudinale (8, 8′, 108, 208) du corps de montage (2, 2′, 102, 202), pour provoquer une migration dudit matériau de ladite feuille (25) en fusion entre lesdites feuillures (9, 10, 9′, 10′, 109, 110, 209, 210) et lesdits chants (6, 7, 106, 107, 206, 207) mutuellement juxtaposés sous forme d'une pellicule longitudinale continue (14, 114, 214) interposée entre lesdites faces longitudinales (5, 8, 8′, 105, 108, 205, 208) d'une part, entre lesdites feuillures (9, 10, 9′, 10′, 109, 110, 209, 210) et lesdits chants (6, 7, 106, 107, 206, 207) d'autre part,

d) autoriser ou provoquer par refroidissement la solidification de ladite pellicule longitudinale continue (14, 114, 214) en maintenant ladite sollicitation pour ancrer de façon continue ladite pellicule au corps de montage (2, 2′, 102, 202) et à la plaque d'usure (3, 103, 203) et solidariser mutuellement ces derniers, par l'intermédiaire de ladite pellicule (14, 114, 214), puis supprimer ladite sollicitation.

2. Procédé selon (la revendication 1, caractérisé en ce que, entre les étapes a et b, on applique au corps de montage (2, 2′, 102, 202) et/ou à la plaque d'usure (3, 103, 203), sur ladite face longitudinale respective (5, 8, 8′, 105, 108. 205, 208) et sur lesdites feuillures (9, 10, 9′, 10′, 109, 110, 209, 210) et/ou sur lesdits chants (6, 7, 106, 107, 206, 207) respectivement, un traitement destiné à faciliter l'ancrage par fusion du matériau de ladite feuille (25).

3. Procédé selon l'une quelconque des revendications 1 et 2, caractérise en ce que le corps de montage (2, 2′, 102, 202), la plaque d'usure (3, 103, 203) et ladite feuille (25) sont métalliques.

4. Procédé selon les revendications 2 et 3 en combinaison, caractérisé en ce que le corps de montage (2, 2′, 102, 202) est en aluminium ou alliage d'aluminium, en ce que la plaque d'usure (3, 103, 203) est en acier inoxydable, ou cuivre, ou laiton, en ce que ladite feuille (25) est en brasure tendre, et en ce que, entre les étapes a et b, on applique sur lesdites faces longitudinales (5, 8, 105. 108, 205, 208), lesdites feuillures (9, 10, 9′, 10′, 109, 110, 209, 210) et lesdits chants (6, 7, 106, 107, 206, 207), un revêtement d'ancrage de ladite brasure tendre.

5. Procédé selon la revendication 4, caractérisé en ce que l'on pratique ledit chauffage, lors de l'étape c, par induction haute fréquence.

6. Procédé selon l'une quelconque des revendications 1 à 5, caractérisé en ce que lesdites faces longitudinales (5, 8) sont planes.

7. Procédé selon l'une quelconque des revendications 1 à 5, caractérisé en ce que lesdites faces longitudinales (5, 8′) sont de forme générale plane et en ce qu'au moins une première (8′) desdites faces longitudinales (5, 8′) porte des reliefs (37) présentant une même hauteur prédéterminée (E) à partir de ladite première (8′) desdites faces longitudinales (5, 8′) et entrant en contact avec la seconde (5) desdites faces longitudinales (5, 8′) en se noyant dans ledit matériau de ladite feuille (25) en fusion lors de l'étape c de façon à communiquer à ladite pellicule (14) une épaisseur égale à ladite hauteur prédéterminée (E), entre lesdites faces longitudinales (5, 8′), lors de l'étape d.

8. Procédé selon l'une quelconque des revendications 1 à 7, caractérise en ce que lesdites feuillures (9, 10, 9′, 10′, 109, 110, 209, 210), respectivement lesdits chants (6, 7, 106, 107, 206, 207), présentent une même dimension (h, e) à partir de ladite face longitudinale (8, 8′, 5, 108, 105, 208, 205) du corps de montage (2, 2′, 102, 202) ou de la plaque d'usure (3, 103, 203), respectivement.

9. Procédé selon l'une quelconque des revendications 1 à 8, caractérisé en ce que chaque feuillure (9, 10, 9′, 10′, 109, 110, 209, 210) présente à partir de ladite face longitudinale (8, 8′, 108, 208) du corps de montage (2, 2′, 102, 202) une dimension (h) au plus égale approximativement à la dimension (e) que le chant correspondant (106, 107, 206, 207) présente à partir de ladite face longitudinale (5, 105, 205) de la plaque d'usure (3).

10. Procédé selon la revendication 9, caractérisé en ce que, entre les étapes b et c et/ou lors de l'étape c et/ou entre les étapes c et d, on déforme lesdites feuillures (9, 10, 9′, 10′, 109, 110, 209, 210) vers les dits chants (6, 7, 106, 107, 206, 207) de telle sorte que lesdites feuillures (9, 10, 9′, 10′, 109, 110, 209, 210) présentent à l'opposé de ladite face longitudinale (8, 8′, 108, 208) du corps de montage (2, 102, 202) un bord longitudinal respectif, continu (15, 16, 15′, 16′) en contact transversal direct de pincement avec lesdits chants (6, 7, 106, 107, 206, 207), respectivement.

11. Procédé selon la revendication 10, caracterise en ce que, lors de l'étape a, on communique auxdits chants (6, 7, 106, 107, 206, 207) une conformation favorable à une immobilisation relative de la plaque d'usure (3) et du corps de montage (2, 2′, 102, 202) par grippage du fait dudit contact transversal direct de pincement.

12. Procédé selon la revendication 11, caractérisé en ce que ladite conformation est choisie dans un groupe comportant les profils en queue d'aronde, les profils molletés, les profils crantés.

13. Procédé selon l'une quelconque des revendications 1 à 12, caractérisé en ce que le corps de montage (2, 2′, 102, 202) comporte deux rebords longitudinaux (11, 12, 11′, 12′) dont chacun définit l'une, respective, desdites feuillures (9, 10, 9′, 10′, 109, 110, 209, 210).

14. Procédé selon l'une quelconque des revendications 1 à 13, caractérisé en ce que lors de l'étape b, on superpose mutuellement, par l'intermédiaire de ladite feuille (25), les faces longitudinales respectives (8, 8', 5) d'un unique corps de montage (2), d'une part, et de plusieurs plaques d'usure (3', 3'') juxtaposées longitudinalement et définissant entre elles des jeux longitudinaux (17), d'autre part.

15. Rail d'alimentation électrique, destiné à assurer l'alimentation électrique d'un mobile par l'intermédiaire d'un organe de captation d'électricité porté par ledit mobile et se déplaçant contre ledit rail (1, 101, 201), ledit rail (1, 101, 201) comportant deux composants longitudinaux (2, 2', 3, 102, 103, 202, 203) mutuellement solidaires, électriquement conducteurs, présentant des sections transversales respectives sensiblement constantes notamment définies par des faces longitudinales respectives (5, 8, 8', 105, 108, 205, 208) continues, mutuellement complémentaires, transversalement juxtaposées mutuellement dans une relation de conduction électrique, à raison d'un corps de montage (2, 102, 202) et d'une plaque d'usure (3, 103, 203) destinée à coopérer avec ledit organe de captation d'électricité,
caractérisé en ce que :
- le corps de montage (2, 2', 102, 202) présente deux feuillures longitudinales continues (9, 10, 9', 10', 109, 110, 209, 210) bordant ladite face longitudinale respective (8, 8', 108, 208),
- la plaque d'usure (3, 103, 203) présente deux chants longitudinaux continus (6, 7, 106, 107, 206, 207) bordant ladite face longitudinale respective (5, 105, 205),
- lesdites feuillures (9, 10, 9', 10', 109, 110, 209, 210) et lesdits chants (6, 7, 106, 107, 206, 207) sont transversalement juxtaposés mutuellement,
- entre lesdites faces longitudinales (5, 8, 8', 105, 108, 205, 208) d'une part, entre lesdites feuillures (9, 10, 9', 10', 109, 110, 209, 210) et lesdits chants (6, 7, 106, 107, 206, 207) d'autre part, est interposée une pellicule longitudinale continue (14, 114, 214) d'un matériau électriquement conducteur ancrée de façon continue sur le corps de montage (2, 2', 102, 202) et sur la plaque d'usure (3, 103, 203) et solidarisant mutuellement ces derniers.

16. Rail selon la revendication 15, caractérisé en ce que le corps de montage (2, 2', 102, 202), la plaque d'usure (3, 103, 203) et ladite pellicule (14, 114, 214) sont métalliques.

17. Rail selon la revendication 16, caractérisé en ce que le corps de montage (2, 2', 102, 202) est en aluminium ou alliage d'aluminium, en ce que la plaque d'usure (3, 103, 203) est en acier inoxydable, ou cuivre, ou laiton, et en ce que la pellicule (14, 114, 214) est en brasure tendre.

18. Rail selon l'une quelconque des revendications 15 à 17, caractérisé en ce que lesdites faces longitudinales (5, 8) sont planes.

19. Rail selon l'une quelconque des revendications 15 à 17, caractérisé en ce que lesdites faces longitudinales (5, 8') sont de forme générale plane et en ce qu'au moins une première (8') desdites faces longitudinales (5, 8') porte des reliefs présentant une même hauteur prédéterminée (E) à partir de ladite première (8') desdites faces longitudinales et placés en contact avec la seconde (5) desdites faces longitudinales (5, 8') à travers ladite pellicule (14), qui présente une épaisseur égale à ladite hauteur prédéterminée (E) entre lesdites faces longitudinales (5, 8').

20. Rail selon l'une quelconque des revendications 15 à 19, caractérisé en ce que lesdites feuillures (9, 10, 9', 10', 109, 110), respectivement lesdits chants (6, 7, 106, 107, 206, 207), présentent une même dimension (h, e) à partir de ladite face longitudinale (8, 8', 5, 108, 105, 208, 205) du corps de montage (2, 2', 102, 202) ou de la plaque d'usure (3, 103, 203), respectivement.

21. Rail selon l'une quelconque des revendications 15 à 20, caractérisé en ce que chaque feuillure (9, 10, 9', 10', 109, 110, 209, 210) présente à partir de ladite face longitudinale (8, 8', 108, 208) du corps de montage (2, 102, 202) une dimension (h) au plus égale approximativement à la dimension (e) que le chant correspondant (6, 7, 106, 107, 206, 207) présente à partir de ladite face longitudinale (5, 105, 205) de la plaque d'usure (3, 103, 203).

22. Rail selon la revendication 21, caractérisé en ce que lesdites feuillures (9, 10, 109, 110, 209, 210) présentent à l'opposé de ladite face longitudinale (5, 8, 8', 105, 108, 205, 208) un bord longitudinal respectif continu (15, 16, 15', 16') en contact transversal direct de pincement avec lesdits chants (6, 7, 106, 107, 206, 207), respectivement.

23. Rail selon la revendication 22, caractérisé en ce que lesdits chants (6, 7, 106, 107, 206, 207) présentent une conformation favorable à une immobilisation relative de la plaque d'usure (3) et du corps de montage (2, 2', 102, 202) par grippage du fait dudit contact transversal direct de pincement.

24. Rail selon la revendication 23, caractérisé en ce que ladite conformation est choisie dans un groupe comportant les profils en queue d'aronde, les profils molletés, les profils crantés.

25. Rail selon l'une quelconque des revendications 15 à 24, caractérisé en ce que le corps de montage (2, 2', 102, 202) comporte deux rebords longitudinaux (11, 12, 11', 12') dont chacun définit l'une, respective, desdites feuillures (9, 10, 9', 10', 109, 110, 209, 210).

26. Rail selon l'une quelconque des revendications 15 à 25, caractérisé en ce qu'il comporte plusieurs plaques d'usure (3', 3'') juxtaposées longitudinalement et définissant entre elles des jeux longitudinaux (17), pour un corps de montage (2, 2') unique.

FIG_1

FIG_9

FIG_2

FIG_3

FIG_4

FIG_5

FIG.6

FIG.7

FIG.8

Office européen des brevets

Numero de la demande

# RAPPORT DE RECHERCHE EUROPEENNE

EP    90 40 2440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4014417 (SWISS ALUMINIUM)<br>* colonne 4, lignes 1 - 25; figure 1 *<br>--- | 1, 15 | B60M1/30 |
| A | FR-A-2239861 (LE MOTEUR LINEAIRE)<br>* page 2, lignes 16 - 33; figure 1 *<br>----- | 1, 15 | |

**DOMAINES TECHNIQUES RECHERCHES (Int. Cl.5)**

B60M
H01R

Le présent rapport a été établi pour toutes les revendications

| Lieu de la recherche | Date d'achèvement de la recherche | Examinateur |
|---|---|---|
| LA HAYE | 15 OCTOBRE 1990 | CERIBELLA G. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P0402)